# EUROPEAN PATENT SPECIFICATION

(11) **EP 4 344 262 B1**
(45) Date of publication and mention of the grant of the patent: **25.06.2025**
(21) Application number: 22197270.6
(22) Date of filing: 23.09.2022
(51) Int. Cl.: H04W 4/38, H04W 4/80, H05B 47/105, H05B 47/19, H04L 12/12, H04L 67/12, H04W 4/06

(54) **SHARING ENVIRONMENTAL INFORMATION VIA A LIGHTING CONTROL NETWORK**
GEMEINSAME NUTZUNG VON UMGEBUNGSINFORMATIONEN ÜBER EIN BELEUCHTUNGSSTEUERUNGSNETZWERK
PARTAGE D'INFORMATIONS ENVIRONNEMENTALES PAR L'INTERMÉDIAIRE D'UN RÉSEAU DE COMMANDE D'ÉCLAIRAGE

(43) Date of publication of application: 27.03.2024
(73) Proprietor: Helvar Oy Ab, 02150 Espoo (FI)
(72) Inventor: OO, Thet, DARTFORD, DA27SY (GB); JUSLÉN, Henri, 02150 ESPOO (FI)
(74) Representative: Berggren Oy

(56) References cited:
- WO-A1-2020/144108
- US-A1- 2015 369 618
- XIAOYU TONG ET AL: "A Ubiquitous Publish/Subscribe Platform for Wireless Sensor Networks with Mobile Mules", DISTRIBUTED COMPUTING IN SENSOR SYSTEMS (DCOSS), 2012 IEEE 8TH INTERNATIONAL CONFERENCE ON, IEEE, 16 May 2012 (2012-05-16), pages 99 - 108, XP032453813, ISBN: 978-1-4673-1693-4, DOI: 10.1109/DCOSS.2012.65
- ALI SALEHI: "Design and Implementation of an Efficient Data StreamProcessing System", INTERNET CITATION, 1 January 2010 (2010-01-01), XP002795124, Retrieved from the Internet <URL:https://pdfs.semanticscholar.org/0e3b/d3672a1964062c528fea878f9771c850f2b9.pdf> [retrieved on 20191021]

## Description

### TECHNICAL FIELD

The present invention relates to sharing of environmental data captured by one or more sensors that are coupled to a lighting control network.

### BACKGROUND

Many lighting systems applied for illuminating an indoor space and/or an outdoor space at least partially rely on autonomous control of light output of luminaires illuminating of the lighting system based on environmental characteristics determined via usage of one or more sensors provided in the illuminated space. Typical, but non-limiting, examples of sensors applicable for capturing control data for controlling the light output include an occupancy sensor and a light sensor: while an occupancy sensor may be applied to switch on (and keep on) lights in response to detecting occupancy in the space and to switch off (and keep off) lights in response to detecting non-occupancy in the space, a light sensor may be applied to control the light output in view of the ambient light in the space such that a desired overall light level is provided. Hence, usage of occupancy sensors and light sensors enable at least partially autonomous lighting control that ensures user comfort while minimizing energy consumption.

In one approach the illuminated space is provided with one or more sensor units that report respective sensor data captured therein over a lighting control network to a control entity, which makes use of the sensor data to control at least some aspects of respective light outputs of luminaires applied for illuminating the space e.g. issuing lighting control commands to the respective luminaires over the lighting control network, whereas in another approach luminaires applied for illuminating the space are provided with respective sensor units and each luminaire may apply the sensor data captured locally by the sensor unit provided therein to control at least some aspects of its light output. Also in the latter scenario at least part of the sensor data captured at the sensor units provided at the luminaires may be shared with other entities coupled to the lighting control network.

In addition to or instead of the occupancy sensors and light sensors described above, the sensor units may include one or more sensor of other type that are arranged for monitoring environmental characteristics such as temperature, humidity, carbon dioxide (CO₂) level, etc. and this data may be likewise shared with other entities coupled to the lighting control network. Such sensor information may be likewise applicable for assisting control of light output of the luminaires of the lighting system and/or for assisting control of building automation systems such as heating, ventilation and air-conditioning (HVAC) systems. However, availability of the sensor data that is descriptive of environmental conditions in the space via entities of the lighting control network provides interesting possibilities for making further use of such information.

In related art, US 2015/369618 A1 discloses a system and method for interactive applications that use location-based information from a light sensor network. In example embodiments, data indicating a destination location inside a geofence is received. The geofence represents a boundary around multiple private beacon nodes, which are associated with a light sensor network, and their associated beacon communications ranges. Navigation and tracking outside the geofence is based on at least one of global positioning system (GPS) signals and beacon signals received by the mobile device from at least one public beacon device within a beacon communications range of the mobile device located outside the geofence. Navigation and tracking inside the geofence is based on the beacon signals received by the mobile device from at least one private beacon node within the beacon communications range of the mobile device located inside the geofence and a virtual map including an area within the geofence.

Further in related art, WO 2020/144108 A1 discloses an improved controller for providing a location-based service to an area, wherein the controller comprises a memory and a transceiver, wherein the controller is configured to: obtain a location of a mobile device associated with a person; obtain sensor data from at least one sensor arranged for monitoring the person in the area when the obtained location of the mobile device is within the area; store the sensor data in the memory; forward, via the transceiver, the stored sensor data to the mobile device when the obtained location of the mobile device is no longer within the area, and subsequently delete the sensor data from the memory. The invention further provides related systems for providing a location-based service to an area and related methods.

Further in related art, Xiaoyu Tong & al., "A Ubiquitous Publish/Subscribe Platform for Wireless Sensor Networks with Mobile Mules", IEEE 8th International Conference on Distributed Computing in Sensor Systems (DCOSS) discloses a ubiquitous publish/subscribe system that supports data access from both mobile sensors and stationary sensors. The system utilizes mobile phones as data mules to relay subscriptions and published data between broker and remote sensors. It provides content-based publish/subscribe services from sensors deployed anywhere without depending on any network infrastructure. The application allows users to subscribe for sensing data from both stationary sensors and mobile sensors along hiking trails.

Further in related art, Ali Salehi, "Design and Implementation of an Efficient Data Stream Processing System" (published in the Internet) discloses research results while designing and implementing an efficient data management system for online and off-line processing of data streams in the field of environmental monitoring, where target data sources are wireless sensor networks.

### SUMMARY

It is an object of the present invention to provide an approach for controlled sharing of information derived based on sensor data captured by one or more sensor units coupled to a lighting control network. The invention is defined by a method for distributing sensor data in accordance with claim 1, and by a sensor unit in accordance with claim 8. Further preferred embodiments are defined in the dependent claims.

According to an example embodiment, a method for distributing sensor data captured at a plurality of sensor units that are coupled to each other via a lighting control network is provided, the method comprising: transmitting, from the plurality of sensor units, respective sensor data captured therein over the lighting control network to a lighting system server; deriving, at the lighting system server, aggregate sensor data based on respective sensor data received from the plurality of sensor units for delivery to the plurality of sensor units and/or to an external apparatus; and transmitting, from a sensor unit of the plurality of sensor units via an external communication channel that is separate from the lighting control network, one or more sensor indication messages comprising information that provide the external apparatus receiving the one or more sensor indication messages with access to the local sensor data captured at the respective sensor unit and to at least part of the aggregate sensor data, wherein the one or more sensor indication messages include information that is descriptive of the local sensor data captured at the respective sensor unit, and the one or more sensor indication messages are transmitted together with an access token for requesting the aggregate sensor data from the lighting system server based on the access token.

According to another example embodiment, a sensor unit for operating as one of a plurality of sensor units that are coupled to each other via a lighting control network, where the sensor unit comprises: a sensor portion comprising one or more sensors for observing respective environmental characteristics at a location of the sensor unit; and a sensor control portion arranged to: derive local sensor data based on respective sensor signals received from said one or more sensors; transmit the local sensor data over the lighting control network to a lighting system server for derivation of aggregate sensor based on respective local sensor data from the plurality of sensor units therein, and transmit, via an external communication channel that is separate from the lighting control network, one or more sensor indication messages for reception by an external apparatus, the one or more sensor indication messages comprising information that provides the external apparatus receiving the one or more sensor indication messages with access to the local sensor data captured at the respective sensor unit and to at least part of the aggregate sensor data, wherein the one or more sensor indication messages include information that is descriptive of the local sensor data captured at the respective sensor unit, and the one or more sensor indication messages are transmitted together with an access token for requesting the aggregate sensor data from the lighting system server based on the access token.

According to another example embodiment, a lighting system is provided, the system comprising a plurality of sensor units according to the example embodiment described in the foregoing; and a lighting system server wherein the lighting system server is arranged to derive aggregate sensor data based on respective local sensor data received from the plurality of sensor units for delivery to the plurality of sensor units and/or to an external apparatus.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2 illustrates a block diagram of some components of a sensor unit according to an example;
Figure 3 illustrates a block diagram of some components of a luminaire according to an example;
Figure 4 illustrates a block diagram of some logical components of a lighting system according to an example;
Figure 5 illustrates a block diagram of some components of a sensor unit integrated to a luminaire according to an example;
Figure 6 illustrates a block diagram of some logical components of a lighting system according to an example;
Figure 7A illustrates a lighting control system according to an example together with an external apparatus;
Figure 7B illustrates a lighting control system according to an example together with an external apparatus;
Figure 8 illustrates a method according to an example; and
Figure 9 illustrates a block diagram of some components of an apparatus according to an example.

### DESCRIPTION OF SOME EMBODIMENTS

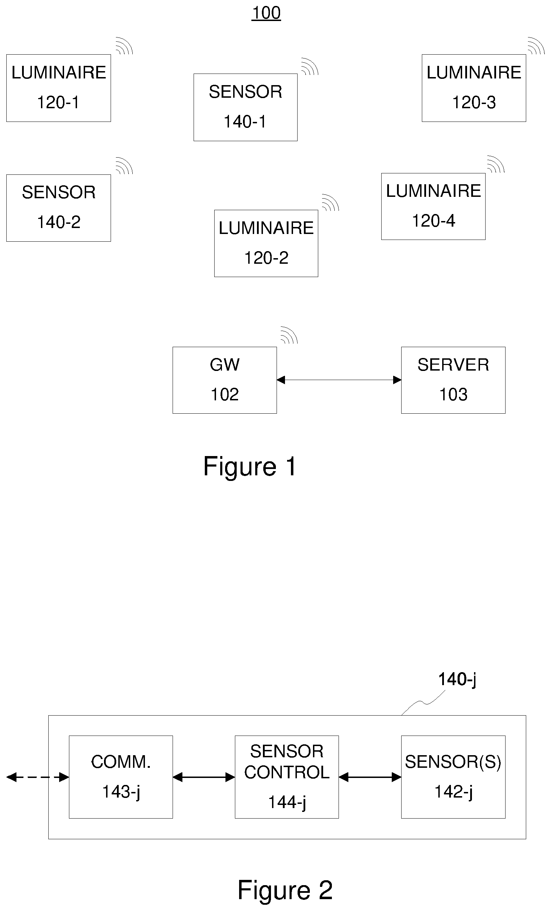

Figure 1 illustrates a block diagram of some components of a lighting system 100 according to an example. The lighting system 100 may be arranged for illuminating a space or area, which may comprise e.g. one or more indoor spaces or areas and/or one or more outdoor areas. In the example of Figure 1 the lighting system 100 is shown with luminaires 120-1, 120-2, 120-3 and 120-4 for illuminating a space or area and sensor units 140-1 and 140-2 for observing environmental characteristics in said space or area. The luminaires 120-1 to 120-4 represent a plurality of luminaires 120, whereas any individual luminaire may be referred to via a reference number 120-k. Along similar lines, the sensor units 140-1 and 140-2 represent a plurality of sensor units 140, while any individual sensor unit may be referred to via a reference number 140-j.

The plurality of luminaires 120 may be arranged for illuminating respective locations of the space, whereas the plurality of sensor units 140 may be arranger for observing one or more environmental characteristics in respective locations of the space illuminated by the plurality of luminaires 120. It is worth noting that the example of Figure 1 serves to illustrate the plurality of luminaires 120 and the plurality of sensor units 140 as respective operational elements of the lighting system 100, while on the other hand the illustration of Figure 1 does not serve to illustrate any physical characteristics of these elements of the lighting system 100 and/or any aspects of spatial relationship between these elements of the lighting system 100.

The plurality of luminaires 120 and the plurality of sensor units 140 may be communicatively coupled to each other via respective wireless communication links or via a wireless communication network provided using a suitable wireless communication technique known in the art, each of the plurality of luminaires 120 and the plurality of sensor units 140 hence serving as a respective node of a lighting control network. The lighting system 100 may include one or more further luminaires in addition to the plurality of luminaires 120 described herein and/or one or more further sensor units in addition to the plurality of sensor units 140 described herein, which may be likewise connected to each other and to other nodes of the lighting control network.

The lighting system 100 may further comprise a lighting system gateway 102 and a lighting system server 103. The lighting system gateway 102 may be communicatively coupled to the plurality of luminaires 120 and to the plurality of sensor units 140, the lighting system gateway 102 hence constituting a node of the lighting control network. The lighting system gateway 102 may be communicatively coupled to the lighting system server 103, where the communitive coupling between these two entities may be provided via a communication network such as the Internet. Hence, the lighting control network may be communicatively coupled to the lighting system server 103 via the lighting system gateway 102. Each of the lighting system gateway 102 and the lighting system server 103 is to be construed as a respective logical entity that may be implemented by one or more computer apparatuses. As an example, the lighting system gateway 102 may be implemented by a single computer apparatus and/or the lighting system server 103 may be implemented by one or more computer apparatuses that may be arranged to provide a cloud computing service.

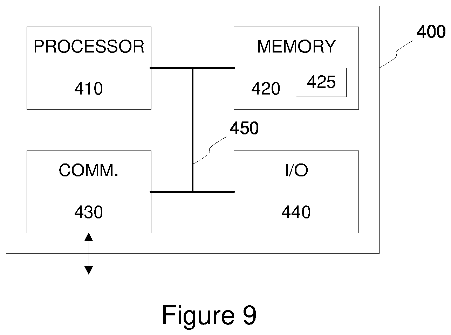

Figure 2 illustrates a block diagram of some (logical) components of a sensor unit 140-j according to an example, comprising a sensor portion 142-j for observing one or more environmental characteristics in the space illuminated by the plurality of luminaires 120, a communication portion 143-j for wireless communication with other elements of the lighting control network and a sensor control portion 144-j for controlling at least one aspect of operation of the sensor unit 140-j and/or for processing sensor data captured at the sensor portion 142-j. In an example, the sensor unit 140-j may comprise an apparatus comprising a processor and a memory, where the memory is arranged to store computer program code that, when executed by the processor, causes the apparatus to operate as the sensor control portion 144-j, thereby implementing operations of the sensor control portion 144-j. More detailed examples of using the processor and the memory for implementing the sensor unit 140-j are described later in this text with references to Figure 9.

Along the lines describe in the foregoing, the communication portion 143-j may enable wireless communication with other apparatuses to allow for exchange of data and/or control information between the sensor unit 140-j and other elements of the lighting control network, while the communication portion 143-j may further enable wireless communication with other apparatuses that may not constitute nodes of lighting control network. In this regard, the communication portion 143-j may comprise a respective communication apparatus, e.g. a wireless transceiver, that is capable of communicating with respective communication apparatuses provided in other elements of the lighting control network using one or more predefined wireless communication techniques or protocols. The wireless communication may be carried out via using a suitable short-range wireless communication technique known in the art that enables communication over ranges from a few meters up to a few hundred meters. Examples of suitable short-range wireless communication techniques include Bluetooth, Bluetooth Low-Energy (BLE), ZigBee, WLAN/Wi-Fi according to an IEEE 802.11 family of standards, etc. The choice of the wireless communication technique and network topology applied for a specific implementation of the lighting control network may depend e.g. on the required communication range and/or requirements with respect to energy-efficiency of the communication apparatuses.

The sensor unit 140-j or an element thereof may have a device ID, e.g. an address, a serial number, a name, etc. assigned thereto, where the device ID assigned to the sensor unit 140-j may be referred to as a sensor unit ID of the sensor unit 140-j. The sensor unit ID may be stored, for example, in the memory provided in the sensor unit 140-j and it may be applied, for example, to identify the respective sensor unit 140-j in communication between elements of the lighting control network.

The sensor portion 142-j may comprise one or more sensors arranged to observe respective environmental characteristics in the space illuminated by the plurality of luminaires 120. The one or more sensors of the sensor portion 142-j may be communicatively coupled, e.g. via respective electrical wires, to the sensor control portion 144-j in order to provide respective sensor signals thereto. The one or more sensors of the sensor portion 142-j may comprise respective sensors of different type, e.g. one or more of the following sensors:
- a motion sensor for monitoring occupancy in the space illuminated by the plurality of luminaires 120, e.g. a passive infrared (PIR) sensor, a microwave radar, a lidar, a video camera, a thermal camera, etc.;
- a light sensor for measuring ambient light level in the space illuminated by the plurality of luminaires 120, e.g. photodetector such as photodiode;
- a temperature sensor for measuring ambient temperature in the space illuminated by the plurality of luminaires 120;
- a humidity sensor for measuring air humidity in the space illuminated by the plurality of luminaires 120;
- a sound sensor (e.g. a microphone or a microphone array) for capturing sounds in the space illuminated by the plurality of luminaires 120;
- a carbon dioxide (CO₂) sensor for measuring a CO₂ level in the space illuminated by the plurality of luminaires 120;
- a volatile organic compound (VOC) sensor for measuring respective levels of one or more VOCs in the space illuminated by the plurality of luminaires 120.

In the course of its operation, the sensor control portion 144-j may record or derive respective sensor indications based on respective sensor signals received from the sensor portion 142-j, which may be referred to as respective local sensor indications since they are based on sensor data captured locally at the sensor unit 140-j, whereas the local sensor indications recorded or derived at the sensor unit 140-j may be jointly referred to as local sensor data. The sensor control portion 144-j may transfer the local sensor indications recorded or derived therein over the lighting control network to the lighting system gateway 102 for centralized lighting control implemented therein, whereas the lighting system gateway 102 may further transfer at least part of the sensor indications obtained from the sensor unit 140-j to the lighting system server 103 for processing therein. The sensor control portion 144-j may further store the local sensor indications into the memory provided in the sensor unit 140-j for subsequent use. Examples of local sensor indications recorded or derived in the sensor control portion 144-j include deriving local occupancy state indications (i.e. respective indications of one of occupancy or non-occupancy) based on a motion sensor signal received from a motion sensor of the sensor portion 142-j, recording or deriving local light level indications based on a light sensor signal received from the sensor portion 142-j, deriving one or more local sound parameters (e.g. ones that are descriptive of sound level in the space) based on a sound sensor signal received from the sound sensor of the sensor portion 142-j, recording or deriving local CO₂ level indications based on a CO₂ sensor signal received from a CO₂ sensor of the sensor portion 142-j, etc.

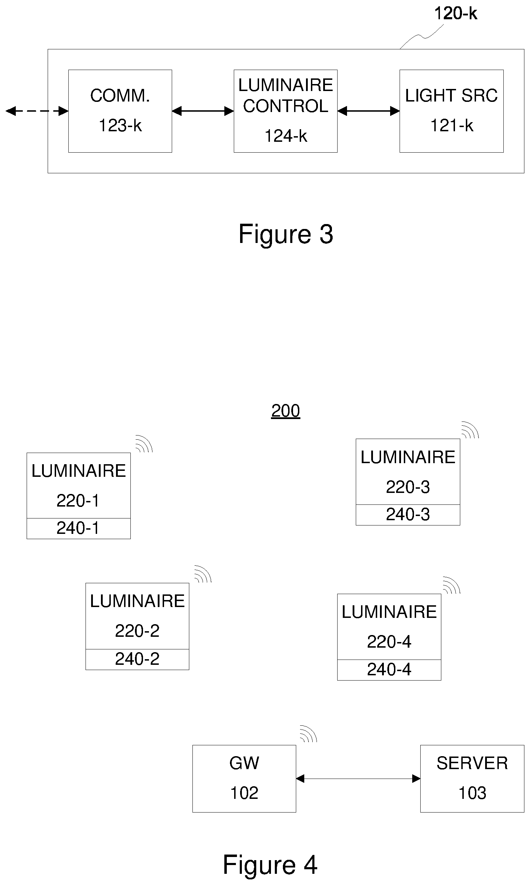

In the following, some characteristic of structure and operation of any of the plurality of luminaires 120 are described via references to the single luminaire 120-k, whereas these characteristics pertain to each of the plurality of luminaires 120, unless explicitly described otherwise. Moreover, certain characteristic of structure and operation of the luminaire 120-k are described herein for completeness of the description, whereas details of luminaire characteristics and operation are outside the scope of the present invention. In this regard, Figure 3 illustrates a block diagram of some (logical) components of a luminaire 120-k according to an example, where the luminaire 120-k may comprise at least one light source 121-k for providing light output of the luminaire 120-k, a communication portion 123-k for wireless communication with other elements of the lighting control network, and a luminaire control portion 124-k for controlling at least one aspect of operation of the luminaire 120-k.

According to an example, the at least one light source 121-k may comprise one or more light emitting diodes (LEDs) and the luminaire control portion 124-k may comprise or it may be provided as a LED driver device, whereas in another non-limiting example the at least one light source 121-k may comprise one or more fluorescent lamps and the luminaire control portion 124-k may comprise or it may be provided as an electronic ballast. The communication portion 123-k may be similar to the communication portion 143-j described in the foregoing, thereby enabling exchange of data and/or control information between the luminaire 120-k and other elements of the lighting control network. According to an example, the luminaire control portion 124-k may control one or more aspects of light output provided from the at least one light source 121-k in accordance with lighting control commands received over the lighting control network from the lighting system gateway 102. In an example, the luminaire 120-k may comprise an apparatus comprising a processor and a memory, where the memory is arranged to store computer program code that, when executed by the processor, causes the apparatus to operate as the luminaire control portion 124-k according to the present disclosure. More detailed examples of using the processor and the memory for implementing the luminaire control portion 124-k are described later in this text with references to Figure 9.

The luminaire 120-k or an element thereof may have a device ID, e.g. an address, a serial number, a name, etc. assigned thereto, where the device ID assigned to the luminaire 120-k may be referred to as a luminaire ID of the luminaire 120-k. The luminaire ID may be stored, for example, in the memory provided in the luminaire 120-k and it may be applied, for example, to identify the respective luminaire 120-k in communication between elements of the lighting control network.

Along the lines described in the foregoing, the lighting system gateway 102 may comprise a lighting control means (e.g. a lighting control portion) for controlling one or more aspects of respective light outputs of the plurality of luminaires based at least in part on the respective sensor indications received from the plurality of sensor units 140. In this regard, the collection of respective sensor indications received from the plurality of sensor units 140 may be referred to as sensor data and the lighting control means may apply a preprogrammed lighting control logic that defines a manner of controlling the respective light outputs from the plurality of luminaires 120 based on the sensor data. In consideration of the lighting control logic to extent it pertains to the luminaire 120-k, the preprogrammed lighting control logic may define switching on the light output of a luminaire 120-k as a response to the sensor data associated with the luminaire 120-k indicating occupancy (after a period of non-occupancy) and define switching off the light output of the luminaire 120-k as a response to the sensor data associated with the luminaire 120-k indicating non-occupancy (after a period of occupancy). In general, the preprogrammed lighting control logic may include one or more predefined lighting control rules, where each lighting control rule may define a respective pair of a triggering condition and a lighting control action to be carried out as a response to an occurrence of the triggering condition, where the triggering condition may directly or indirectly pertain to sensor indications included in the sensor data received at the lighting system gateway 102 from the plurality of sensor units 140. The control means may enforce the lighting control actions occurring from application of the lighting control logic therein via transmitting respective lighting control commands over the lighting control network to the respective luminaire 120-k, where the lighting control portion 120-k adjusts the light output from the at least light source 121-k in accordance with lighting control commands received from the lighting system gateway 102. Moreover, along the lines described in the foregoing, the lighting control means in the lighting system gateway 102 may transfer the sensor data received from the plurality of sensor units 140 to the lighting system server 103 for further processing and/or analysis therein.

In a variation of the lighting control approach described above, the respective sensor control portion 144-j in each sensor unit 140-j may implement respective preprogrammed lighting control logic (instead of the lighting system gateway 102 implementing the lighting control logic therein) to control the respective light outputs of a respective subset of the plurality of luminaires 120. Consequently, in such a scenario the lighting control pertaining to a luminaire 120-k may involve the sensor unit 140-j transmitting lighting control commands corresponding to the lighting control actions arising from application of the respective lighting control logic therein over the lighting control network to the luminaire 120-k. In another variation of the lighting control approach described above, the lighting control logic pertaining to a luminaire 120-k may be implemented by the lighting control portion 124-k of the respective luminaire 120. In such a scenario, each sensor unit 140-j may (also) transfer at least part of the respective local sensor indications recorded or derived therein to those ones of the plurality luminaires 120 that are associated with the respective sensor unit 140-j. Consequently, lighting control actions arising from application of the lighting control logic in a luminaire 120-k may be directly applied at the respective luminaire 120-k.

Figure 4 illustrates a block diagram of some components of a lighting system 200 according to an example, which is similar to the lighting system 100 apart from a different arrangement of the sensor units in relation to the luminaires. In particular, the lighting system 200 is shown with luminaires 220-1, 220-1, 220-3 and 220-4 for illuminating said space, whereas respective sensor units 240-1, 240-2, 240-3 and 240-4 for observing environmental characteristics in said space or area are integrated to the respective ones of the luminaires 220-1, 220-1, 220-3 and 220-4. In context of this example, the luminaires 220-1 to 220-4 represent a plurality of luminaires 220, where any individual luminaire may be referred to via a reference number 220-k. Along similar lines, the sensor units 240-1 to 240-4 represent a plurality of sensor units 240, where any individual sensor unit may be referred to via a reference number 240-k. Each of the luminaires 220-k may be arranged for illuminating a respective location of said area or space, whereas the respective sensor unit 240-k may be arranged for observing one or more environmental characteristics in the respective location. It is worth noting that the example of Figure 4 serves to illustrate the plurality of luminaires 220 and the plurality of sensor units 240 integrated thereto as respective operational elements of the lighting system 200, while on the other hand the illustration of Figure 4 does not serve to illustrate any physical characteristics of these elements of the lighting system 200 and/or any aspects of spatial relationship between these elements of the lighting system 200.

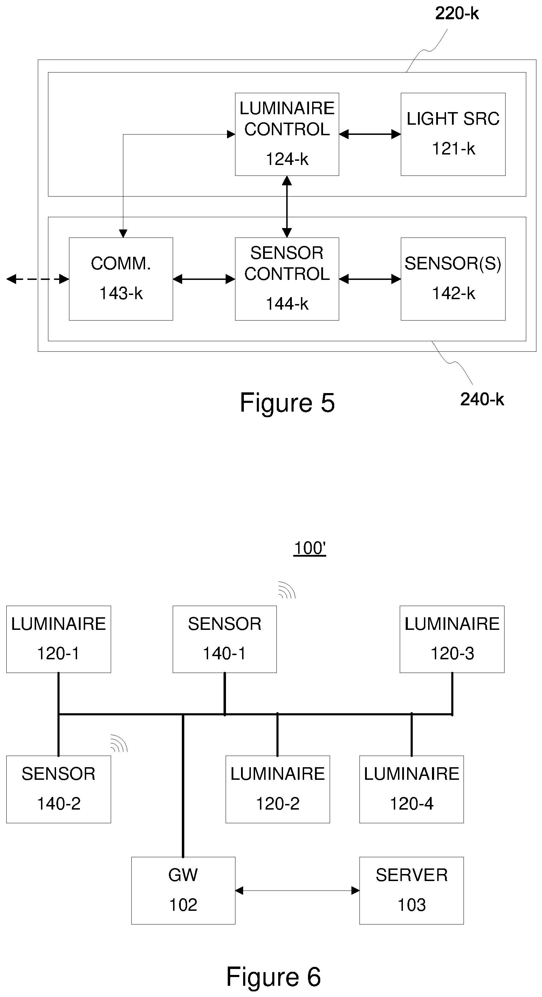

Figure 5 illustrates a block diagram of some (logical) components of a luminaire 220-k with the sensor unit 240-k integrated thereto according to an example. The sensor unit 240-k comprises a sensor portion 142-k for observing one or more environmental characteristics in the space illuminated by the luminaire 220-k, a communication portion 143-k for wireless communication with other elements of the lighting control network and a sensor control portion 144-k for controlling at least one aspect of operation of the sensor unit 240-k and/or for processing sensor data captured at the sensor portion 142-k. The luminaire 220-k comprises the at least one light source 121-k for providing light output of the luminaire 220-k and the luminaire control portion 124-k for controlling at least one aspect of operation of the luminaire 220-k.

The sensor portion 142-k, the communication portion 143-k and the sensor control portion 144-k may be similar to the corresponding elements described in the foregoing with references to the sensor unit 140-j with the exception that the sensor control portion 144-k may further transfer at least part of the local sensor data to the luminaire control portion 124-k e.g. via one or more electrical wires to enable lighting control therein. As an example in this regard, the sensor data passed from the sensor control portion 144-k to the luminaire control portion 124-k may comprise local occupancy indications and/or local light level indications. Further in this regard, the at least one light source 121-k and the luminaire control portion 124-k at the luminaire 220-k may be similar to the corresponding elements described in the foregoing with references to the luminaire 120-k, where the luminaire control portion 124-k may apply the preprogrammed lighting control logic for the luminaire 220-k based on the local sensor indications obtained from the sensor control portion 144-k of the sensor unit 240-k integrated to the luminaire 220-k and the luminaire control portion 124-k may further apply the lighting control actions arising from application of the lighting control logic at the luminaire 220-k, thereby providing at least partially autonomous lighting control at the luminaire 220-k.

As a difference to the luminaire 120-k, the luminaire 220-k as illustrated in the example of Figure 5 does not include a dedicated communication portion but the luminaire control 124-k may be able to apply the communication portion 143-k of the sensor unit 240-k for wireless communication with the other nodes of the lighting control network. In another example, the communication portion 143-k in the sensor unit 240-k may be omitted and the luminaire 220-k may include a communication portion similar to the communication portion 123-k described in the foregoing with references to the luminaire 120-k, whereas the sensor control portion 144-k in the sensor unit 240-k may be able to apply the communication portion provided in the luminaire 220-k for wireless communication with other elements of the lighting control network.

In variations of the respective lighting system 100, 200 according to the examples of Figures 1 and 4 described in the foregoing, the lighting control network that serves to connect the plurality of luminaires 120, 220 and/or the plurality of sensor units 140, 240 to each other and to the lighting system gateway 102 may be implemented as a wired communication network or as a wired communication bus. As a non-limiting example in this regard, Figure 6 illustrates a block diagram of some components of a lighting system 100' according to an example, which is similar to the lighting system 100 apart from the communicative coupling between the plurality of luminaires 120 and the plurality of sensor units 140. In particular, in the lighting system 100' illustrated in Figure 6 the luminaires 120-1, 120-2, 120-3 and 120-4 represent the plurality of luminaires 120 and the sensor units 140-1 and 140-2 represent the plurality of sensor units 140, and the plurality of luminaires 120, the plurality of sensor units 140 and the lighting system gateway 102 are coupled to each other via a wired communication network or a wired communication bus.

Still referring to the lighting control system 100', according to an example, the respective sensor control portion 144-j in each sensor unit 140-j may implement respective preprogrammed lighting control logic for controlling the respective light outputs of a respective subset of the plurality of luminaires 120. Consequently, in such a scenario the lighting control pertaining to a luminaire 120-k may involve the sensor unit 140-j transmitting lighting control commands corresponding to the lighting control actions arising from application of the respective lighting control logic therein over the lighting control network to the luminaire 120-k. According to another example, the lighting control logic pertaining to a luminaire 120-k may be implemented by the lighting control portion 124-k of the respective luminaire 120, whereas each sensor unit 140-j may transfer at least part of the respective local sensor indications recorded or derived therein to those ones of the plurality luminaires 120 that are associated with the respective sensor unit 140-j. Consequently, lighting control actions arising from application of the lighting control logic in a luminaire 120-k may be directly applied at the respective luminaire 120-k.

In variants of the lighting systems 100, 200 such as the lighting system 100' the lighting control network may be provided using a predefined lighting control protocol, such as the Digital Addressable Lighting Interface (DALI) specified in a series of technical standards IEC 62386, whereas the respective communication portions 123-k, 143-j, 143-k in the nodes of the lighting control network may be arranged to provide communication over the lighting control network in accordance with the applicable lighting control protocol. Also in such variants of the lighting system 100, 200 the respective communication portions 123-k, 143-j, 143-k may be also capable of wireless communication with other apparatuses that may not constitute nodes of lighting control network.

Along the lines described in the foregoing, the lighting control means in the lighting system gateway 102 may transfer at least part of the sensor data received from the sensor units 140, 240 to the lighting system server 103 for further processing and/or analysis therein. In this regard, the respective sensor data originating from a certain sensor unit 140-j, 240-k may be considered as respective local sensor data in viewpoint of the respective sensor unit 140-j, 240-k, in viewpoint of the lighting system server 103 this sensor data may be considered as respective remote sensor data. Along similar lines, respective local sensor indications originating from a certain sensor unit 140-j, 240-k may be considered at the lighting system server 103 as respective remote sensor indications.

The lighting system server 103 includes analysis means for processing and/or analyzing at least part of the respective remote sensor data originating from the plurality of sensor units 140, 240 in order to estimate overall environmental characteristics across the space or area illuminated by the lighting system 100, 100', 200. In this regard, the analysis means is arranged to derive one or more aggregate sensor indications based on respective remote sensor indications originating from sensors of certain type provided at respective sensor portions 143-j, 143-k of the sensor units 140-j, 240-k, where the one or more aggregate sensor indications derived via operation of the analysis means may be jointly referred to as aggregate sensor data and the one or more aggregate sensor values may include one or more of the following:
- a global sensor indication derived based on respective remote sensor indications originating from all sensor units 140-j, 240-k of the plurality of sensor units 140, 240,
- one or more zone-specific sensor indications, where each regional sensor indication may be derived based on respective remote sensor indications originating from a respective predefined subset of the plurality of sensor units 140, 240 (where each subset preferably includes sensor units located within a respective predefined sub-area or zone of the illuminated space or area).

Further in this regard, each aggregate sensor indication may be derived based on respective remote sensor indications originating from respective sensors of a certain type at the plurality of sensor units 140, 240 (or at a predefined subset thereof), e.g. from respective motion sensors, from respective light sensors, from respective temperature sensors, from respective humidity sensors, from respective sound sensors, from respective CO₂ sensors, from respective VOC sensors, etc.

Consequently, the global sensor indication may be derived as a predefined function of respective remote sensor indications originating from sensors of a certain type at the plurality of sensor units 140, 240, whereas a zone-specific sensor indication may be derived as a predefined function of respective remote sensor indications originating from sensors of a certain type at a respective predefined subset of the plurality of sensor units 140, 240. As examples in this regard, the predefined function may include an average, a median, a minimum or a maximum of the remote sensor indications under consideration or another statistical value derivable based on the remote sensor indications under consideration. Concrete non-limiting examples of aggregate sensor indications derivable via the analysis means in the lighting system server 103 include the following:
- a global occupancy indicator that is descriptive of an occupancy level across the space illuminated by the lighting system 100, 100', 200 and/or one or more zone-specific occupancy indicator that are descriptive of respective occupancy levels at respective sub-portions of the space or area illuminated by the lighting system 100, 100', 200,
- a global temperature indicator that is descriptive of an average temperature across the space illuminated by the lighting system 100, 100', 200 and/or one or more zone-specific temperature indicators that are descriptive of respective temperatures at respective sub-portions of the space or area illuminated by the lighting system 100, 100', 200,
- a global sound level indicator that is descriptive of an average noise level across the space illuminated by the lighting system 100, 100', 200 and/or one or more zone-specific sound level indicators that are descriptive of respective noise levels at respective sub-portions of the space or area illuminated by the lighting system 100, 100', 200.

The analysis means may derive the one or more aggregate sensor indications, for example, according to a predefined schedule and it may transmit information that is descriptive of the derived one or more aggregate sensor indications to the plurality of sensors units 140, 240 via the lighting system gateway 102. Hence, the information that is descriptive of the derived one or more aggregate sensor indications may be transferred from the lighting system server 103 to the lighting system gateway 102 via the communication network connecting these two entities, whereas the lighting system gateway 102 may transmit (e.g. broadcast) this information over the lighting control network to the plurality of sensor units 140, 240.

The sensor unit 140-j, 240-k further shares at least part of the sensor data available therein with an external apparatus over a wireless link or a wireless network. In this regard, the wireless connection applied for sharing the sensor data may be the same applied for connecting to the lighting control network or it may be different from the one applied for connecting to the lighting control network. Regardless of the wireless connection applied for sharing of the sensor data, the sharing of sensor data may be carried out via the communication portion 143-j, 143-k of the sensor unit 140-j, 240-k.

In this regard, the sharing of sensor data is provided via one or more sensor indication messages transmitted from the sensor unit 140-j, 240-k and the sharing of sensor data is carried out using the following approach: the sensor unit 140-j, 240-k transmits one or more sensor indication messages that include information that is descriptive of the local sensor data recorded or derived at the sensor unit 140-j, 240-k and the one or more sensor indication messages are transmitted together with access information for obtaining the one or more aggregate sensor indications from the lighting system server 103. In other examples that are not part of the claimed invention, sharing of the sensor data may be carried out e.g. one of the following approaches:
- the sensor unit 140-j, 240-k may transmit one or more sensor indication messages that include information that is descriptive of the local sensor data recorded or derived at the sensor unit 140-j, 240-k;
- the sensor unit 140-j, 240-k may transmit one or more sensor indication messages that include information that is descriptive of the local sensor data recorded or derived at the sensor unit 140-j, 240-k and that further include the one or more aggregate sensor indications available at the sensor unit 140-j, 240-k.

Each of these approaches regarding delivery of the sensor data available at the sensor unit 140-j, 240-k possibly together with the one or more aggregate sensor indications derived and/or available in the lighting system 100, 100', 200 are discussed in further detail in the following examples.

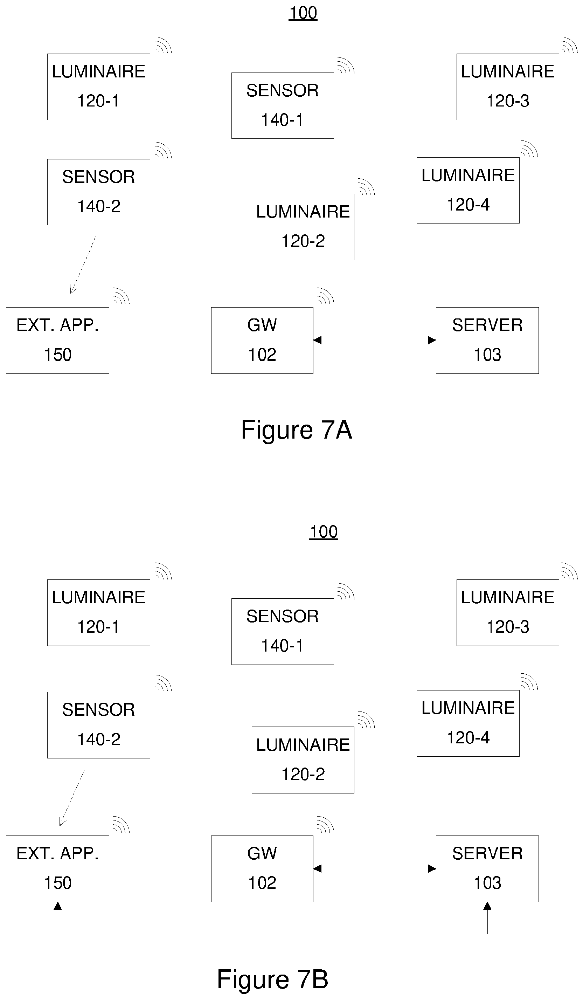

Figure 7A illustrates a block diagram showing the components of the lighting system 100 also shown in the illustration of Figure 1 together with an external apparatus 150. In the example of Figure 7A the external apparatus 150 may receive the one or more sensor indication messages from the sensor unit 140-2 of the lighting system 100, whereas in general case the one or more sensor indication messages may originate from any sensor unit 140-j of the lighting system 100 or 100' or from any sensor unit 240-k of the lighting system 200. In a first example regarding delivery of the sensor data from the sensor unit 140-j, 240-k to the external apparatus 150, the one or more sensor indication messages transmitted from the sensor unit 140-j, 240-k may include information that is descriptive of one or more local sensor indications recorded or derived via operation of the sensor control portion 144-j, 144-k at the sensor unit 140-j, 240-k based on the respective sensor signal received from the sensor portion 142-j, 142-k. While the local sensor data acquired at the sensor unit 140-j, 240-k may be primarily intended to serve as basis for lighting control within the lighting system 100, 100', 200, such sharing of the local sensor data may be applied to make at least part of this sensor data available for external apparatuses locally at proximity of the sensor unit 140-j, 240-k.

As an example in this regard, the information delivered in the one or more sensor indication messages may include information that is descriptive of local sensor data captured at the sensor unit 140-j, 240-k. As an example in this regard, this information may include respective local sensor indications recorded or derived based on respective sensor signals obtained from all sensors provided in the sensor portion 142-j, 142-k, whereas in another example the information delivered in the one or more sensor indication messages may include information that is descriptive of respective local sensor indications recorded or derived based on respective sensor signals obtained from a predefined subset of the sensors provided in the sensor portion 142-j, 142-k. The latter approach may be applicable as a straightforward approach for limiting access to information that may be considered sensitive (such as occupancy information) and/or to avoid allocating transmission bandwidth for conveying information that is considered to provide limited added value for user(s) of the external apparatus 150.

In consideration of the local sensor indications originating from a certain sensor of the sensor portion 142-j, 142-k, the local sensor data serving as basis for the information included in the one or more sensor indication messages may include a predefined number of local sensor indications most recently recorded or derived at the sensor unit 140-j, 240-k. The information transmitted in the one or more sensor indication messages may include these local sensor indications as such or one or more values derived based on these local sensor indications. Hence, as non-limiting examples, the information transmitted in the one or more sensor indication messages may be descriptive of an aspect of current environmental conditions at the location of the sensor unit 140-j, 240-k, such as occupancy, light level, temperature, humidity, sound level, CO₂ level, respective levels of one or more VOCs, etc.

The sensor unit 140-j, 240-k may transmit the one or more sensor indication messages according to a predefined schedule, e.g. at predefined time intervals. If such periodical transmission at predefined time intervals is applied, the time interval may be chosen according to circumstances and the interval may be chosen e.g. from a range from a few seconds to a few minutes. Consequently, the sensor unit 140-j, 240-k may transmit a set of one or more sensor indication messages according to the predefined schedule, where the number of sensor indication messages may depend on the amount of information to be transmitted in relation to the information transfer capacity enabled by an underlying data transmission mechanism.

The information included in the one or more sensor indication messages may be formatted according to any suitable manner known by the sensor unit 140-j, 240-k transmitting the one or more sensor indication messages and the external apparatus 150 receiving the one or more sensor indication messages. In this regard, the sensor control portion 144-j, 144-k may arrange the information to be conveyed in the one or more sensor indication messages into respective sensor data elements that are suited for transport in one or more protocol data units (PDUs) of an underlying data transport protocol, whereas the external apparatus is provided with a capability to extract the information from the sensor data elements from the received PDUs. This may involve providing the external apparatus with an executable program (provided e.g. as a software application that may be installed and executed at the external apparatus) that is arranged to extract the sensor data from the sensor data elements conveyed in the PDUs of the underlying data transport protocol. Hence, the PDUs applied for data transport may be considered to provide an external wireless communication channel that is separate from the lighting control network applied in transferring the local sensor data from the sensor unit 140-j, 240-k to the lighting system gateway 102 for delivery to the lighting system server 103.

As a non-limiting example of data transport from the sensor unit 140-j, 240-k to the external apparatus 150, the one or more sensor indication messages may be conveyed using advertising messages of the BLE advertising channel PDUs, which may be also referred to as BLE advertising packets, as BLE advertisements or as BLE adverts. In this regard, the one or more sensor indication messages may be transmitted (e.g. broadcast) in a respective user-definable data fields of one or more BLE advertising packets. The employed BLE advertising packets may comprise, for example, connectable undirected advertising (ADV_IND) packets, non-connectable undirected advertising (ADV_NONCONN_IND) packets and/or scannable undirected advertising (ADV_SCAN_IND) packets, where sensor indication messages may be included e.g. in the Complete Local Name fields and/or in a Manufacturer Specific Data sections of the applied BLE advertising packets.

According to an example, the external apparatus 150 may comprise a user device such as a mobile phone (e.g. a smartphone), a smartwatch, a tablet computer, a laptop computer, a desktop computer, etc. that is able to display the information conveyed in the one or more sensor indication messages to a user of the user device. According to another example, the external apparatus 150 may comprise a display apparatus provided in a respective location of the space illuminated by the lighting system 100, 100', 200. Consequently, the one or more sensor indication messages provide the external apparatus 150 with access to the data that is descriptive of environmental characteristics at or close to its location and the external apparatus 150 may arrange the sensor data received in the one or more sensor indication messages into a format that suitable for viewing via a display of the external apparatus 150 and display this information to the user(s) of the user(s) of the external apparatus 150 and/or to occupants of the space, thereby providing the user(s) with up-to-date information concerning one or more environmental characteristics at the respective location of the space or area illuminated by the lighting system 100, 100', 200 without the need to establish a network connection to the lighting system server 103.

In a second example regarding delivery of the sensor data from the sensor unit 140-j, 240-k to the external apparatus 150, which is not part of the claimed invention, the one or more sensor indication messages transmitted from the sensor unit 140-j, 240-k may further include information that is descriptive of at least part of the aggregate sensor data available at the sensor unit 140-j, 240-k. In other words, in the second example the one or more sensor indication messages transmitted from the sensor unit 140-j, 240-k may include information that is descriptive of the local sensor data captured at the sensor unit 140-j, 240-k together with one or more aggregate sensor indications available at the sensor unit 140-j, 240-k. In the second example, the difference to the first example is inclusion of at least a portion of the aggregate sensor data available at the sensor unit 140-j, 240-k in the one or more sensor indication messages, whereas other aspects related to transmission and format of the one or more sensor indication messages may be similar to those described in the foregoing for the first example.

As an example of aggregate sensor data delivered from the sensor unit 140-j, 240-k to the external apparatus 150, the one or more sensor indication messages may include information that is descriptive of respective aggregate sensor indications originating from sensors of any type, whereas in another example the one or more sensor indication messages may include information that is descriptive of aggregate sensor indications that pertain to sensor data originating from sensors of a predefined subset of sensor types. The latter approach may be applicable as a straightforward approach for limiting access to information that may be considered sensitive (such as occupancy information) and/or to avoid allocating transmission bandwidth for conveying information that is considered to provide limited added value for user(s) of the external apparatus 150.

In consideration of the aggregate sensor indications that pertain to sensors of a certain type, the aggregate sensor data serving as basis for the information included in the one or more sensor indication messages may include a predefined number of aggregate sensor indications most recently received from the lighting system server 103. In this regard, the information transmitted in the one or more sensor indication messages may include these aggregate sensor indications as such or one or more values derived based on these aggregate sensor indications. In view of the forgoing, the aggregate sensor indications that pertain to sensors of a certain type and that are available at the sensor unit 140-j, 240-k may comprise a global sensor indication that is descriptive of respective environmental condition across the space or area illuminated by the lighting system 100, 100', 200 and/or one or more zone-specific sensor indications that are descriptive of the respective environmental condition at respective portions of the space or area illuminated by the lighting system 100, 100', 200. Hence, the one or more sensor indication messages according to the second example may convey information that is may descriptive of an aspect of current environmental conditions at the location of the sensor unit 140-j, 240-k, such as occupancy, light level, temperature, humidity, sound level, CO₂ level, respective levels of one or more VOCs, etc. together with information that may be descriptive of the corresponding aspect of current environmental conditions across the space or area illuminated by the lighting system 100, 100', 200 and/or information that may be descriptive of the corresponding aspect of current environmental conditions in one or more sub-portions of the space or area illuminated by the lighting system 100, 100', 200.

The one or more sensor indication messages according to the second example may provide the external apparatus 150 with access to the data that is descriptive of environmental characteristics at or close to its location together with access to data that is descriptive of the corresponding environmental characteristics elsewhere in the space or area illuminated by the lighting system 100, 100', 200. Consequently, the external apparatus 150 may arrange at least part of the sensor data received in the one or more sensor indication messages into a format that suitable for viewing via a display of the external apparatus 150 and display this information to the user(s) of the user(s) of the external apparatus 150 and/or to occupants of the space, thereby providing the user(s) with up-to-date information concerning one or more environmental characteristics at the respective location of the space or area illuminated by the lighting system 100, 100', 200 and/or elsewhere in the illuminated space or area without the need to establish a network connection between the external apparatus 150 and the lighting system server 103.

Depending on the type of sensor data conveyed in the sensor indication messages, the information displayed to the user(s) via the display of the user apparatus 150 may include e.g. respective indications of one or more of the occupancy level, the temperature, the humidity, the sound level (e.g. a noise level), the CO₂ level, the VOC levels at or close to the current location of the user apparatus together with respective indications obtained for one or more sub-portions of the space illuminated by the lighting system 100, 100', 200 and/or to the space illuminated by the lighting system 100, 100', 200 in its entirety. Consequently, the user(s) may make use of the displayed information, for example, to identify a location or a sub-portion of said space where the environmental conditions of interest have the best match with her/his preferences.

Figure 7B illustrates a block diagram showing the components of the lighting system 100 also shown in the illustration of Figure 1 together with the external apparatus 150, where the arrangement illustrated via the example of Figure 7B may serve as the framework for a third example regarding delivery of the sensor data from the sensor unit 140-j, 240-k to the external apparatus 150. In the example of Figure 7B the external apparatus 150 may receive the one or more sensor indication messages from the sensor unit 140-2 of the lighting system 100, whereas in general case the one or more sensor indication messages may originate from any sensor unit 140-j of the lighting system 100 or 100' or from any sensor unit 240-k of the lighting system 200. Moreover, the external apparatus 150 may be communicatively coupled to the lighting system server 103 via a communication network such as the Internet or the external apparatus 150 may be capable of establishing a communicative coupling to the lighting system server 103 via such communication network for transfer of control information and (sensor) data.

In the third example, the information that is descriptive of the local sensor data captured at the respective sensor unit 140-j, 240-k is transmitted together with an access token that serves to identify the source of the local sensor data acquired at the external apparatus 150 via reception of the one or more sensor indication messages and, consequently, validates the external device 150 as an entity that is authorized to access at least part of the aggregate sensor data, whereas the one or more sensor indication messages according to the third example may be similar to those of the first example and hence the external apparatus 150 may receive the information that is descriptive of the local sensor indications directly from the sensor unit 140-j, 240-k.

As an example, the access token may comprise the sensor unit ID assigned to the respective sensor unit 140-j, 240-k. In this regard, the PDUs applied for transferring the one or more sensor indication messages may further include the sensor unit ID assigned to the respective sensor unit 140-j, 240-k and, consequently, the external apparatus 150 may receive the sensor unit ID of the respective sensor unit 140-j, 240-k together with the one or more sensor indication messages. In a variation of this approach, the sensor unit ID may be (additionally or alternatively) included in the one or more sensor indication messages transmitted from the respective sensor unit 140-j, 240-k. Consequently, the external apparatus 150 may request the aggregate sensor data from the lighting system server 103 based on the sensor unit ID received from the sensor unit 140-j, 240-k. In this regard, the external apparatus 150 may send a request for the aggregate sensor data to the lighting system server 103, where the request includes the sensor unit ID received from the respective sensor unit 140-j, 240-k. The external apparatus 150 may have a priori knowledge of the address of the lighting system server 103 or the external apparatus 150 may receive the address of the lighting system server 103 via a user interface of the external apparatus. In a further example, the one or more sensor indication messages may further include the address of the lighting system server 103 and, consequently, the external apparatus 150 may receive the address of the lighting system server 103 together with the local sensor data from the sensor unit 140-j, 240-k.

Still continuing the example with the sensor unit ID of the sensor unit 140-j, 240-k serving as the access token, in case the lighting system server 103 finds the sensor unit ID received in the request originating from the external apparatus 150 to be a valid one (e.g. one of one or more predefined sensor unit IDs), the lighting system server 103 may respond to the request by transmitting the aggregate sensor data to the external apparatus 150, whereas in case of the request including an invalid sensor unit ID, no data may be transmitted from the lighting system server 103 to the external apparatus 103. In a variation of this approach, the external apparatus 150 may be authorized to access only a predefined subset of the aggregate sensor data available at the lighting system server 103 in dependence of the sensor unit ID included in the request, e.g. a respective predefined subset of global sensor indications (e.g. ones that pertain to a respective predefined subset of sensor types) and/or a respective predefined subset of zone-specific sensor indications (e.g. ones that pertain to respective sub-area(s) of the space illuminated by the lighting system 100, 100', 200). Hence, knowledge of the sensor unit ID of the sensor unit 140-j, 240-k having provided the one or more sensor indication messages serves as an indication of the external apparatus 150 being located in relatively close proximity of the respective sensor unit 140-j, 240-k, which may be considered in the third example as a sufficient prerequisite for the external apparatus 150 being allowed to receive at least part of the aggregate sensor data from the lighting system server 103.

In a variation of the third example, which is not part of the claimed invention, the access token may comprise an ID associated with the external apparatus 150, such as a user ID assigned to a user of the external apparatus 150 or a device ID assigned to the external apparatus 150. As an example in this regard, the request for the aggregate sensor data sent from the external apparatus 150 may further include the user ID, whereas the lighting system server 103 may respond to the request by transmitting the aggregate sensor data to the external apparatus 150 only in case the user ID received in the request matches one of predefined user IDs that represent users that are authorized to access the aggregate sensor data. In a variation of this approach, the external apparatus 150 may be authorized to access only a predefined subset of the aggregate sensor data available at the lighting system server 103 in dependence of the user ID included in the request, e.g. a respective predefined subset of global sensor indications (e.g. ones that pertain to a respective predefines subset of sensor types) and/or a respective predefined subset of zone-specific sensor indications (e.g. ones that pertain to respective sub-area(s) of the space illuminated by the lighting system 100, 100', 200). Hence, upon receiving from the external apparatus 150 a request that includes the user ID, the lighting system server 103 may respond by providing the external apparatus 150 with the predefined subset of the aggregate sensor data defined via the received user ID. While described herein with references to using the user ID as the access token, the access to the aggregate sensor data available at the lighting system server 103 may be limited in a similar manner via application of the device ID of the external apparatus 150 instead of the user ID as the access token, *mutatis mutandis.*

In a fourth example regarding delivery of the sensor data from the sensor unit 140-j, 240-k to the external apparatus 150, the one or more sensor indication messages may be transmitted from the sensor unit 140-j, 240-k in response to an activation message received from the external apparatus 150. Conversely, the external apparatus 150 may transmit (e.g. broadcast) the activation message as an indication of a wish to receive the one or more sensor indication messages from the sensor unit 140-j, 240-k in its vicinity. The activation message may comprise an activation token to be verified by the sensor unit 140-j, 240-k and the sensor unit 140-j, 240-k may initiate transmission of the one or more sensor indication messages in response to determining that the activation token received in the activation message is a valid one. In this regard, transmission of the one or more sensor indication messages and their processing at the external apparatus 150 may be similar to that described above for the first, second and third examples. Hence, the external apparatus 150 may indicate its authorization to access the sensor data available via the lighting control network via submitting a valid activation token to one of the plurality of sensor units 140, 240, whereas the external apparatus 150 may have access to a valid activation token via executing a program (provided e.g. as a software application that may be installed and executed at the external apparatus) provided for the purpose of accessing the sensor data available via the lighting control network.

Along the lines described in the foregoing for the one or more sensor indication messages, according to a non-limiting example the activation message may be conveyed using advertising messages of the BLE advertising channel PDUs (also called BLE advertising packets), where the activation message may be transmitted (e.g. broadcast) in a respective user-definable data fields of one or more BLE advertising packets. The BLE advertising packets employed for transporting the activation message may comprise, for example, connectable undirected advertising (ADV_IND) packets, non-connectable undirected advertising (ADV_NONCONN_IND) packets and/or scannable undirected advertising (ADV_SCAN_IND) packets, where sensor indication messages may be included e.g. in the Complete Local Name fields and/or in a Manufacturer Specific Data sections of the applied BLE advertising packets.

In a further example, when at a certain location within the space or area illuminated by the lighting system 100, 100', 200, the external apparatus 150 may receive respective one or more sensor indication messages from multiple sensor units 140-j, 240-k and the external apparatus 150 may report the respective sensor unit IDs of these multiple sensor units 140-j, 240-k together with respective signal strength indications (RSSIs) at which the sensor indication messages from the respective sensor units 140-j, 240-k have been received to the lighting system server 103. With the knowledge of the respective RSSI associated with the multiple sensor units 140-j, 240-k around the external apparatus 150, the lighting system server 103 may determine the location of external apparatus 150 with respect to these multiple sensor units 140-j, 240 and, consequently, with a priori knowledge of the respective locations of these multiple sensor units 140-j, 240-k (e.g. based on their respective sensor unit IDs) the lighting system server 103 may estimate the location of the external apparatus 150 within the space or area illuminated by the lighting system 100, 100', 200, which may enable estimation of environmental conditions at the location of the external apparatus 150 at improved accuracy and/or reliability.

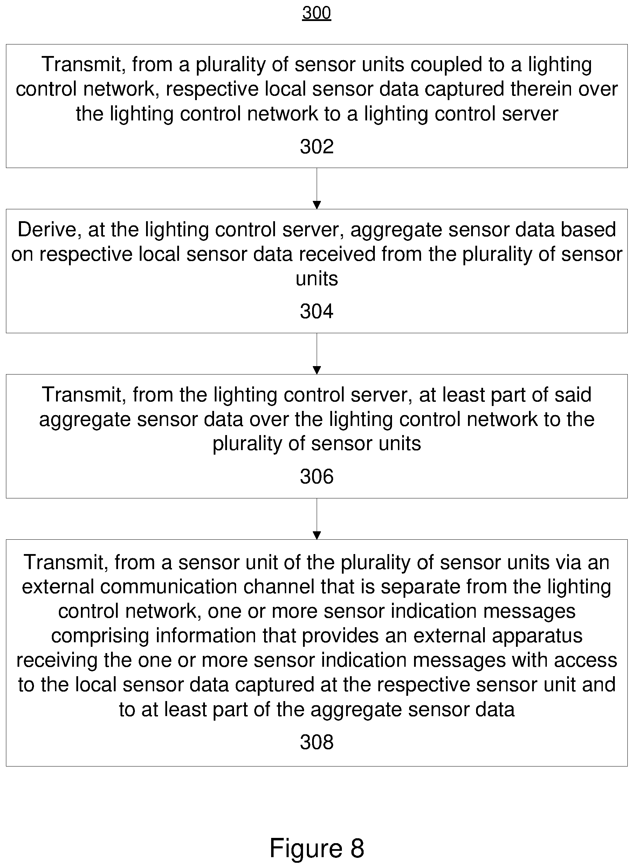

According to an example, various aspects of related to distribution of the sensor data captured at the plurality of sensor units 140, 240 that are coupled to each other via the lighting control network may be also described via a method carried out in one or more elements of the lighting system 100, 100', 200 and/or the external device. As an example in this regard, Figure 8 illustrates a method 300 for distributing the sensor data, where the method 300 may comprise e.g. the following steps:
- transmit, from the plurality of sensor units 140, 240, respective local sensor data captured therein over the lighting control network to the lighting system server 103 (block 302);
- derive, at the lighting system server 103, aggregate sensor data based on respective local sensor data received from the plurality of sensor units 140, 240 (block 304);
- transmit, from the lighting system server 103, at least part of said aggregate sensor data over the lighting control network to the plurality of sensor units 140, 240 (block 306); and
- transmit, from a sensor unit 140-j, 240-k of the plurality of sensor units 140, 240 via an external communication channel that is separate from the lighting control network, one or more sensor indication messages comprising information that provides the external apparatus 150 receiving the one or more sensor indication messages with access to the local sensor data captured at the respective sensor unit 140-j, 240-k and to at least part of the aggregate sensor data (block 308).

The respective operations described with references to the method steps represented by blocks 302 to 308 may be varied or complemented in a number of ways, e.g. according to the examples that pertain to operation and/or characteristics of elements of the lighting system 100, 100', 200 and the external apparatus 150 described in the foregoing. Moreover, the method 300 may be complemented with one or more additional steps, the order of carrying out at least some of the method steps may be different from that depicted in Figure 8 and/or some of the method steps may be omitted without departing from the scope of the lighting control approach according to the method 300.

As a non-limiting example of omitting some of the methods steps, the operations described with reference to block 306 may be omitted e.g. in a scenario where the external apparatus 150 requests the aggregate sensor data from the lighting system server 130 (e.g. in accordance with the third and fourth examples described in the foregoing). As non-limiting examples of additional method steps, the respective operations described with reference to blocks 302 to 308 may be followed by the external apparatus 150 acquiring the aggregate sensor data (if not readily included in the one or more sensor indication messages received from the sensor unit 140-j, 240-k), the external apparatus 150 arranging the local sensor data received in the one or more sensor indication messages from the sensor unit 140-j, 240-k and/or (at least part of) the aggregate sensor data into a format suitable for being displayed to one or more users, and the external apparatus 150 displaying this information to the one or more users via a display of the external apparatus 150.

Figure 9 illustrates a block diagram of some components of an apparatus 400 that may be employed to implement at least some of the operations described with references to the respective one of the luminaire 120-k, the sensor unit 140-j, 240-k, the external apparatus 150, the lighting system gateway 102 or the lighting system server 103. The apparatus 400 comprises a processor 410 and a memory 420. The memory 420 may store data and computer program code 425. The apparatus 400 may further comprise communication means 430 for wired or wireless communication with other apparatuses, where the communication means 430 may comprise the respective one of the communication portions 123-k, 143-j, 143-k. The apparatus 400 may further comprise user I/O (input/output) components 440 that may be arranged, together with the processor 410 and a portion of the computer program code 425, to provide a user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 400 are communicatively coupled to each other via a bus 450 that enables transfer of data and control information between the components.

The memory 420 and a portion of the computer program code 425 stored therein may be further arranged, with the processor 410, to cause the apparatus 400 to perform at least some aspects of controlling operation of the respective one of the luminaire 120-k, the sensor unit 140-j, 240-k, the external apparatus 150, the lighting system gateway 102 or the lighting system server 103. The processor 410 is configured to read from and write to the memory 420. Although the processor 410 is depicted as a respective single component, it may be implemented as respective one or more separate processing components. Similarly, although the memory 420 is depicted as a respective single component, it may be implemented as respective one or more separate components, some or all of which may be integrated/removable and/or may provide permanent / semi-permanent/ dynamic/cached storage.

The computer program code 425 may comprise computer-executable instructions that implement at least some aspects of controlling operation of the respective one of the luminaire 120-k, the sensor unit 140-j, 240-k, the external apparatus 150, the lighting system gateway 102 or the lighting system server 103 when loaded into the processor 410. As an example, the computer program code 425 may include a computer program consisting of one or more sequences of one or more instructions. The processor 410 is able to load and execute the computer program by reading the one or more sequences of one or more instructions included therein from the memory 420. The one or more sequences of one or more instructions may be configured to, when executed by the processor 410, cause the apparatus 400 to perform at least some aspects of controlling operation of the respective one of luminaire 120-k, the sensor unit 140-j, 240-k, the external apparatus 150, the lighting system gateway 102 or the lighting system server 103. Hence, the apparatus 400 may comprise at least one processor 410 and at least one memory 420 including the computer program code 425 for one or more programs, the at least one memory 420 and the computer program code 425 configured to, with the at least one processor 410, cause the apparatus 400 to perform at least some aspects of controlling operation of the respective one of the luminaire 120-k, the sensor unit 140-j, 240-k, the external apparatus 150, the lighting system gateway 102 or the lighting system server 103.

The computer program code 425 may be provided e.g. a computer program product comprising at least one computer-readable non-transitory medium having the computer program code 425 stored thereon, which computer program code 425, when executed by the processor 410 causes the apparatus 400 to perform at least some aspects of controlling operation of the respective one of the luminaire 120-k, the sensor unit 140-j, 240-k, the external apparatus 150, the lighting system gateway 102 or the lighting system server 103. The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A method (300) for distributing sensor data captured at a plurality of sensor units (140, 240) that are coupled to each other via a lighting control network, the method (300) comprising:
transmitting (302), from the plurality of sensor units (140, 240), respective local sensor data captured therein over the lighting control network to a lighting system server (103);
deriving (304), at the lighting system server (103), aggregate sensor data based on respective sensor data received from the plurality of sensor units (140, 240) for delivery to the plurality of sensor units (140, 240) and/or to an external apparatus (150); and
transmitting (308), from a sensor unit (140-j, 240-k) of the plurality of sensor units (140, 240) via an external communication channel that is separate from the lighting control network, one or more sensor indication messages comprising information that provide the external apparatus (150) receiving the one or more sensor indication messages with access to the local sensor data captured at the respective sensor unit (140-j, 240-k) and to at least part of the aggregate sensor data,
**characterized in that** the one or more sensor indication messages include information that is descriptive of the local sensor data captured at the respective sensor unit (140-j, 240-k), and the one or more sensor indication messages are transmitted together with an access token for requesting the aggregate sensor data from the lighting system server (103) based on the access token.

2. A method (300) according to claim 1, wherein transmitting (308) the one or more sensor indication messages comprises broadcasting one or more protocol data units that carry the one or more sensor indication messages.

3. A method (300) according to claim 2, wherein said one or more protocol data units comprise one or more Bluetooth Low Energy advertising protocol data units.

4. A method according to any of claims 1 to 3, wherein said access token comprises a device ID of the respective sensor unit (140-j, 240-k).

5. A method (300) according to any of claims 1 to 4, wherein the one or more sensor indication messages include an address of the lighting system server (103).

6. A method (300) according to any of claims 1 to 5, further comprising:
transmitting, from the external apparatus (150) to the lighting system server (103), a request to receive the aggregate sensor data from the lighting system server (103), wherein the request includes the access token; and
transmitting, from the lighting system server (103) to the external apparatus (150), at least part of the aggregate sensor data in response to determining that the access token is a valid one.

7. A method (300) according to any of claims 1 to 6, further comprising:
transmitting, from the external apparatus (150) to the respective sensor unit (140-j, 240-k), an activation message that comprises an activation token; and
transmitting the one or more sensor indication messages from the respective sensor unit (140-j, 240-k) in response to determining that the activation token received in the activation message is a valid one.

8. A sensor unit (140-j, 240-k) for operating as one of a plurality of sensor units (140, 240) that are coupled to each other via a lighting control network, where the sensor unit (140-j, 240-k) comprises:
a sensor portion (142-j, 142-k) comprising one or more sensors for observing respective environmental characteristics at a location of the sensor unit (140-j, 240-k); and
a sensor control portion (144-j, 144-k) arranged to:
derive local sensor data based on respective sensor signals received from said one or more sensors,
transmit the local sensor data over the lighting control network to a lighting system server (103) for derivation of aggregate sensor data based on respective local sensor data from the plurality of sensor units (140, 240) therein, and
transmit, via an external communication channel that is separate from the lighting control network, one or more sensor indication messages for reception by an external apparatus (150), the one or more sensor indication messages comprising information that provides the external apparatus (150) receiving the one or more sensor indication messages with access to the local sensor data captured at the respective sensor unit (140-j, 240-k) and to at least part of the aggregate sensor data,
**characterized in that** the one or more sensor indication messages include information that is descriptive of the local sensor data captured at the respective sensor unit (140-j, 240-k), and the one or more sensor indication messages are transmitted together with an access token for requesting the aggregate sensor data from the lighting system server (103) based on the access token.

9. A lighting system (100, 100', 200) comprising:
a plurality of sensor units (140, 240) according to claim 8; and the lighting system server (103),
wherein the lighting system server (103) is arranged to derive the aggregate sensor data based on respective local sensor data received from the plurality of sensor units (140, 240) for delivery to the plurality of sensor units (140, 240) and/or to the external apparatus (150).

10. A lighting system (100, 100', 200) according to claim 9,
further comprising the external apparatus (150) arranged to:
receive the respective one or more sensor indication messages transmitted from one of the plurality of sensor units (140, 240), and
transmit, to the lighting system server (103), a request to receive the aggregate sensor data from the lighting system server (103), wherein the request includes the access token,
wherein the lighting system server (103) is arranged to transmit, to the external apparatus (150), at least part of the aggregate sensor data in response to determining that the access token is a valid one.

## Patentansprüche

1. Verfahren (300) zum Verteilen von Sensordaten, die an einer Vielzahl von Sensoreinheiten (140, 240), die über ein Beleuchtungssteuerungsnetzwerk miteinander gekoppelt sind, erfasst werden, wobei das Verfahren (300) umfasst:
Übertragen (302), von der Vielzahl von Sensoreinheiten (140, 240), jeweiliger darin erfasster lokaler Sensordaten über das Beleuchtungssteuerungsnetzwerk an einen Beleuchtungssystemserver (103);
Ableiten (304), an dem Beleuchtungssystemserver (103), aggregierter Sensordaten basierend auf jeweiligen Sensordaten, die von der Vielzahl von Sensoreinheiten (140, 240) empfangen werden, zur Lieferung an die Vielzahl von Sensoreinheiten (140, 240) und/oder an eine externe Einrichtung (150) und
Übertragen (308), von einer Sensoreinheit (140-j, 240-k) der Vielzahl von Sensoreinheiten (140, 240) über einen externen Kommunikationskanal, der vom Beleuchtungssteuerungsnetzwerk getrennt ist, einer oder mehrerer Sensorangabenachricht(en), die Informationen umfasst/umfassen, die der externen Einrichtung (150), die die eine oder die mehreren Sensorangabenachricht(en) empfängt, Zugriff auf die lokalen Sensordaten, die an der jeweiligen Sensoreinheit (140-j, 240-k) erfasst werden, und auf mindestens einen Teil der aggregierten Sensordaten bereitstellen,
**dadurch gekennzeichnet, dass** die eine oder die mehreren Sensorangabenachricht(en) Informationen einschließt/einschließen, die die lokalen Sensordaten beschreiben, die an der jeweiligen Sensoreinheit (140-j, 240-k) erfasst werden, und die eine oder die mehreren Sensorangabenachricht(en) zusammen mit einem Zugriffs-Token zum Anfordern der aggregierten Sensordaten von dem Beleuchtungssystemserver (103) basierend auf dem Zugriffs-Token übertragen werden.

2. Verfahren (300) nach Anspruch 1, wobei das Übertragen (308) der einen oder der mehreren Sensorangabenachricht(en) das Rundsenden einer oder mehrerer Protokolldateneinheit(en), die die eine oder die mehreren Sensorangabenachricht(en) trägt/tragen, umfasst.

3. Verfahren (300) nach Anspruch 2, wobei die eine oder die mehreren Protokolldateneinheit(en) eine oder mehrere Bluetooth-Low-Energy-Ankündigungsprotokolldateneinheit(en) umfasst/umfassen.

4. Verfahren nach einem der Ansprüche 1 bis 3, wobei das Zugriffs-Token eine Vorrichtungs-ID der jeweiligen Sensoreinheit (140-j, 240-k) umfasst.

5. Verfahren (300) nach einem der Ansprüche 1 bis 4, wobei die eine oder die mehreren Sensorangabenachricht(en) eine Adresse des Beleuchtungssystemservers (103) einschließt/einschließen.

6. Verfahren (300) nach einem der Ansprüche 1 bis 5, das ferner umfasst:
Übertragen, von der externen Einrichtung (150) an den Beleuchtungssystemserver (103), einer Anforderung zum Empfangen der aggregierten Sensordaten von dem Beleuchtungssystemserver (103), wobei die Anforderung das Zugriffs-Token einschließt; und
Übertragen, von dem Beleuchtungssystemserver (103) an die externe Einrichtung (150), mindestens eines Teils der aggregierten Sensordaten als Reaktion auf das Bestimmen, dass das Zugriffs-Token ein gültiges ist.

7. Verfahren (300) nach einem der Ansprüche 1 bis 6, das ferner umfasst:
Übertragen, von der externen Einrichtung (150) an die jeweilige Sensoreinheit (140-j, 240-k), einer Aktivierungsnachricht, die ein Aktivierungs-Token umfasst; und
Übertragen der einen oder der mehreren Sensorangabenachricht(en) von der jeweiligen Sensoreinheit (140-j, 240-k) als Reaktion auf das Bestimmen, dass das Aktivierungs-Token, das in der Aktivierungsnachricht empfangen wird, ein gültiges ist.

8. Sensoreinheit (140-j, 240-k) zum Arbeiten als eine einer Vielzahl von Sensoreinheiten (140, 240), die über ein Beleuchtungssteuerungsnetzwerk miteinander gekoppelt sind, wobei die Sensoreinheit (140-j, 240-k) umfasst:
einen Sensorabschnitt (142-j, 142-k), der einen oder mehrere Sensor(en) zum Beobachten jeweiliger Umgebungscharakteristiken an einem Ort der Sensoreinheit (140-j, 240-k) umfasst; und
einen Sensorsteuerabschnitt (144-j, 144-k), der angeordnet ist zum:
Ableiten lokaler Sensordaten basierend auf jeweiligen Sensorsignalen, die von dem einen oder den mehreren Sensoren empfangen werden,
Übertragen der lokalen Sensordaten über das Beleuchtungssteuerungsnetzwerk an einen Beleuchtungssystemserver (103) zur Ableitung aggregierter Sensordaten basierend auf jeweiligen lokalen Sensordaten von der Vielzahl von Sensoreinheiten (140, 240) darin und
Übertragen, über einen externen Kommunikationskanal, der von dem Beleuchtungssteuerungsnetzwerk getrennt ist, einer oder mehrerer Sensorangabenachricht(en) zum Empfang durch eine externe Einrichtung (150), wobei die eine oder die mehreren Sensorangabenachricht(en) Informationen umfasst/umfassen, die der externen Einrichtung (150), die die eine oder die mehreren Sensorangabenachricht(en) empfängt, Zugriff auf die lokalen Sensordaten, die an der jeweiligen Sensoreinheit (140-j, 240-k) erfasst werden, und auf mindestens einen Teil der aggregierten Sensordaten bereitstellen,
**dadurch gekennzeichnet, dass** die eine oder die mehreren Sensorangabenachricht(en) Informationen einschließt/einschließen, die die lokalen Sensordaten beschreiben, die an der jeweiligen Sensoreinheit (140-j, 240-k) erfasst werden, und die eine oder die mehreren Sensorangabenachricht(en) zusammen mit einem Zugriffs-Token zum Anfordern der aggregierten Sensordaten von dem Beleuchtungssystemserver (103) basierend auf dem Zugriffs-Token übertragen werden.

9. Beleuchtungssystem (100, 100', 200), das umfasst:
eine Vielzahl von Sensoreinheiten (140, 240) nach Anspruch 8 und
den Beleuchtungssystemserver (103),
wobei der Beleuchtungssystemserver (103) zum Ableiten der aggregierten Sensordaten basierend auf jeweiligen Sensordaten, die von der Vielzahl von Sensoreinheiten (140, 240) empfangen werden, zur Lieferung an die Vielzahl von Sensoreinheiten (140, 240) und/oder an eine externe Einrichtung (150) angeordnet ist.

10. Beleuchtungssystem (100, 100', 200) nach Anspruch 9,
das ferner die externe Einrichtung (150) umfasst, die angeordnet ist zum:
Empfangen der jeweiligen einen oder mehreren Sensorangabenachricht(en), die von einer der Vielzahl von Sensoreinheiten (140, 240) übertragen wird/werden, und Übertragen, an den Beleuchtungssystemserver (103), einer Anforderung zum Empfangen der aggregierten Sensordaten von dem Beleuchtungssystemserver (103), wobei die Anforderung das Zugriffs-Token einschließt,
wobei der Beleuchtungssystemserver (103) zum Übertragen, an die externe Einrichtung (150), mindestens eines Teils der aggregierten Sensordaten als Reaktion auf das Bestimmen, dass das Zugriffs-Token ein gültiges ist, angeordnet ist.

## Revendications

1. Procédé (300) de distribution de données de capteur capturées au niveau d'une pluralité d'unités de capteur (140, 240) qui sont couplées les unes aux autres par l'intermédiaire d'un réseau de commande d'éclairage, le procédé (300) comprenant :
la transmission (302), à partir de la pluralité d'unités de capteur (140, 240), de données de capteur locales respectives capturées dans celles-ci sur le réseau de commande d'éclairage vers un serveur de système d'éclairage (103) ;
la dérivation (304), au niveau du serveur de système d'éclairage (103), de données de capteur agrégées basées sur des données de capteur respectives reçues à partir de la pluralité d'unités de capteur (140, 240) pour la livraison à la pluralité d'unités de capteur (140, 240) et/ou à un appareil externe (150) ; et
la transmission (308), à partir d'une unité de capteur (140-j, 240-k) de la pluralité d'unités de capteur (140, 240) par l'intermédiaire d'un canal de communication externe qui est séparé du réseau de commande d'éclairage, d'un ou de plusieurs messages d'indication de capteur comprenant des informations qui fournissent à l'appareil externe (150) recevant le ou les messages d'indication de capteur un accès aux données de capteur locales capturées au niveau de l'unité de capteur respective (140-j, 240-k) et à au moins une partie des données de capteur agrégées,
**caractérisé en ce que** le ou les messages d'indication de capteur comprennent des informations qui sont descriptives des données de capteur locales capturées au niveau de l'unité de capteur respective (140-j, 240-k), et le ou les messages d'indication de capteur sont transmis conjointement avec un jeton d'accès pour demander les données de capteur agrégées à partir du serveur de système d'éclairage (103) sur la base du jeton d'accès.

2. Procédé (300) selon la revendication 1, la transmission (308) du ou des messages d'indication de capteur comprenant la diffusion d'une ou de plusieurs unités de données de protocole qui transportent le ou les messages d'indication de capteur.

3. Procédé (300) selon la revendication 2, lesdites une ou plusieurs unités de données de protocole comprenant une ou plusieurs unités de données de protocole de publicité Bluetooth à faible énergie.

4. Procédé selon l'une quelconque des revendications 1 à 3, ledit jeton d'accès comprenant un identifiant de dispositif de l'unité de capteur respective (140-j, 240-k) .

5. Procédé (300) selon l'une quelconque des revendications 1 à 4, le ou les messages d'indication de capteur comprenant une adresse du serveur de système d'éclairage (103).

6. Procédé (300) selon l'une quelconque des revendications 1 à 5, comprenant en outre :
la transmission, à partir de l'appareil externe (150) au serveur de système d'éclairage (103), d'une demande pour recevoir les données de capteur agrégées à partir du serveur de système d'éclairage (103), la demande comprenant le jeton d'accès ; et
la transmission, à partir du serveur de système d'éclairage (103) à l'appareil externe (150), d'au moins une partie des données de capteur agrégées en réponse à la détermination que le jeton d'accès est valide.

7. Procédé (300) selon l'une quelconque des revendications 1 à 6, comprenant en outre :
la transmission, à partir de l'appareil externe (150) à l'unité de capteur respective (140-j, 240-k), d'un message d'activation qui comprend un jeton d'activation ; et
la transmission du ou des messages d'indication de capteur à partir de l'unité de capteur respective (140-j, 240-k) en réponse à la détermination que le jeton d'activation reçu dans le message d'activation est valide.

8. Unité de capteur (140-j, 240-k) pour fonctionner comme l'une d'une pluralité d'unités de capteur (140, 240) qui sont couplées les unes aux autres par l'intermédiaire d'un réseau de commande d'éclairage, l'unité de capteur (140-j, 240-k) comprenant :
une partie de capteur (142-j, 142-k) comprenant un ou plusieurs capteurs pour observer des caractéristiques environnementales respectives à un emplacement de l'unité de capteur (140-j, 240-k) ; et
une partie de commande de capteur (144-j, 144-k) agencée pour :
dériver des données de capteur locales basées sur des signaux de capteur respectifs reçus à partir desdits un ou plusieurs capteurs,
transmettre les données de capteur locales sur le réseau de commande d'éclairage à un serveur de système d'éclairage (103) pour la dérivation de données de capteur agrégées basées sur des données de capteur locales respectives à partir de la pluralité d'unités de capteur (140, 240) présentes à cet endroit, et
transmettre, par l'intermédiaire d'un canal de communication externe qui est séparé du réseau de commande d'éclairage, un ou plusieurs messages d'indication de capteur pour la réception par un appareil externe (150), le ou les messages d'indication de capteur comprenant des informations qui fournissent à l'appareil externe (150) recevant le ou les messages d'indication de capteur un accès aux données de capteur locales capturées au niveau de l'unité de capteur respective (140-j, 240-k) et à au moins une partie des données de capteur agrégées,
**caractérisé en ce que** le ou les messages d'indication de capteur comprennent des informations qui sont descriptives des données de capteur locales capturées au niveau de l'unité de capteur respective (140-j, 240-k), et le ou les messages d'indication de capteur sont transmis conjointement avec un jeton d'accès pour demander les données de capteur agrégées à partir du serveur de système d'éclairage (103) sur la base du jeton d'accès.

9. Système d'éclairage (100, 100', 200) comprenant :
une pluralité d'unités de capteur (140, 240) selon la revendication 8 ; et
le serveur de système d'éclairage (103),
le serveur de système d'éclairage (103) étant agencé pour dériver les données de capteur agrégées basées sur des données de capteur locales respectives reçues à partir de la pluralité d'unités de capteur (140, 240) pour la livraison à la pluralité d'unités de capteur (140, 240) et/ou à l'appareil externe (150).

10. Système d'éclairage (100, 100', 200) selon la revendication 9,
comprenant en outre l'appareil externe (150) agencé pour :
recevoir le ou les messages d'indication de capteur respectifs transmis à partir de l'une de la pluralité d'unités de capteur (140, 240), et transmettre, au serveur de système d'éclairage (103), une demande pour recevoir les données de capteur agrégées à partir du serveur de système d'éclairage (103), la demande comprenant le jeton d'accès,
le serveur de système d'éclairage (103) étant agencé pour transmettre, à l'appareil externe (150), au moins une partie des données de capteur agrégées en réponse à la détermination que le jeton d'accès est valide.
